# FASCICULE DE BREVET EUROPEEN

(11) **EP 1 368 996 B1**
(45) Date de publication et mention de la délivrance du brevet: **21.07.2004**
(21) Numéro de dépôt: 02711960.1
(22) Date de dépôt: 15.01.2002
(51) Int. Cl.: H05B 33/02, B60Q 3/04, B64D 47/02

(54) **DISPOSITIF DE RETROECLAIRAGE POUR ECRAN DE VISUALISATION PAR TRANSMISSION COMPATIBLE AVEC LA VISION DE NUIT**
NACHTSICHT-KOMPATIBLE RÜCKBELEUCHTUNGSVORRICHTUNG FÜR EINE TRANSMITTIERENDE ANZEIGETAFEL
BACKLIGHTING DEVICE FOR DISPLAY SCREEN BY NIGHT-VISION COMPATIBLE TRANSMISSION

(30) Priorité: 26.01.2001 FR 0101104
(43) Date de publication de la demande: 10.12.2003
(73) Titulaire: Thales, 75008 Paris (FR)
(72) Inventeur: BERTHOU, Nicolas, Thales Intellectual Property, F-94117 Arcueil Cedex (FR); BREDA, Jean-Marc, Thales Intellectual Property, F-94117 Arcueil Cedex (FR)
(74) Mandataire: Collet, Alain
(86) Numéro de dépôt international: PCT/FR2002/000142
(87) Numéro de publication internationale: WO 2002/060224

(56) Documents cités:
- EP-A- 0 364 346
- EP-A- 0 797 180
- US-A- 5 143 433
- US-A- 6 132 072
- PATENT ABSTRACTS OF JAPAN vol. 2000, no. 13, 5 février 2001 (2001-02-05) & JP 2000 294379 A (CASIO COMPUT CO LTD), 20 octobre 2000 (2000-10-20)
- PATENT ABSTRACTS OF JAPAN vol. 1996, no. 11, 29 novembre 1996 (1996-11-29) & JP 08 194445 A (MATSUSHITA ELECTRIC IND CO LTD), 30 juillet 1996 (1996-07-30)

## Description

La présente invention est relative aux écrans de visualisation de type transmissif qui nécessitent un éclairage par l'arrière et notamment, à une boite à lumière fournissant cet éclairage.

Les écrans plats en couleur, de type transmissif, comme les écrans plats à cristaux liquides, utilisés en avionique et en particulier dans le domaine militaire, comportent une multitude de points appelés pixels dont la transparence est commandée par une tension électrique. Chaque pixel est commandé séparément en vue de former une image sur l'écran. Dans le cas des images en couleur chaque pixel est composé habituellement d'une mosaïque de trois sous-pixels de couleur différente commandée indépendamment. Les couleurs finales des pixels qui en résultent par suite d'une combinaison additive de lumière au niveau de l'oeil de l'observateur sont obtenues par une combinaison particulière des tensions de commande de chaque sous-pixel.

Pour permettre leur visualisation, les écrans plats en couleur de type transmissif doivent être éclairés par l'arrière au moyen d'une source lumineuse auxiliaire dite boîte à lumière. Pour un bon rendu des couleurs cette source lumineuse doit éclairer l'écran en lumière blanche de manière aussi uniforme que possible.

Par ailleurs, la consultation de l'écran doit pouvoir se faire dans des conditions de luminosité ambiante très variées, par exemple, de jour en plein soleil ou par ciel voilé et de nuit par éclairement faible ou nul. Ces contraintes conduisent à l'utilisation d'une source lumineuse de rétroéclairage réglable en luminance dans une large gamme d'intensité lumineuse pouvant atteindre un rapport de 50 tout en conservant un spectre d'émission ou température de couleur constante pour éviter de détériorer les couleurs de l'écran rétroéclairé.

Pour obtenir cette grande dynamique de luminance, les boîtes à lumière de rétroéclairage d'un écran plat transmissif en couleur de l'état de l'art, comportent un double étage de sources lumineuses disposées derrière un écran diffusant. L'éclairage de forte luminance pour un mode de jour, se fait à l'aide d'un premier étage de sources lumineuses constitué d'une rangée dé tubes fluorescents placée en premier rideau derrière l'écran diffusant. L'éclairage de faible luminance pour un ou plusieurs modes de nuit se fait à l'aide d'un deuxième étage de sources lumineuses constitué d'autres lampes fluorescentes en moins grand nombre placées soit en deuxième rideau, derrière les premières lampes soit sur les côtés de la boite à lumière.

Les boîtes à lumière basées sur l'utilisation de tubes fluorescents comportent des nombreux inconvénients. En effet, le nombre de tubes utilisés dans la boîte à lumière, du fait de leur taille, reste réduit ce qui comporte l'inconvénient en cas de panne d'un des tubes, malgré la présence du diffuseur, de provoquer une inhomogénéité du rétroéclairage de l'écran de visualisation par transmission. En outre, comme les tubes fluorescents utilisés pour un éclairage faible (mode nuit) sont en nettement moins grand nombre, que ceux utilisés pour un éclairage de forte luminance (mode jour), ils forment une rampe lumineuse encore plus inhomogène avec laquelle il est plus difficile d'obtenir un éclairage uniforme de l'écran. Pour cette raison, les tubes pour l'éclairage faible sont les plus éloignés de l'écran diffusant et toujours utilisés en éclairage indirect. Les tubes fluorescents pour l'éclairage faible sont placés en deuxième rideau, les tubes utilisés pour l'éclairage en forte luminance, placés en premier rideau, servent de cache empêchant par leur présence dans le trajet des rayons lumineux des tubes placés en deuxième rideau, un éclairement direct de l'écran diffusant. Lorsque la deuxième rangée des tubes fluorescents est placée sur les côtés de la boîte, à lumière, les tubes sont couplés à une cavité de la boîte à lumière par un guide d'onde optique particulier. Ces dispositions des tubes fluorescents conduisent à des boîtes à lumière ayant un grand encombrement et un coût élevé. En outre, les boîtes à lumière utilisant des lampes ou des tubes fluorescents posent des problèmes pour l'évacuation de la chaleur. En effet, comme on cherche à réaliser une boîte à lumière de volume réduit, la chaleur produite par les tubes s'accumule dans un volume réduit; cette chaleur est habituellement évacuée par conduction thermique à travers la face arrière de la boite à lumière ce qui est contradictoire avec la position, à proximité de l'écran diffuseur, des tubes en premier rideau, donnant le plus fort éclairement et donc produisant la plus grande partie des calories dans la boîte.

En outre, l'utilisation des tubes fluorescents, au spectre large débordant dans l'infrarouge, pour fournir un éclairage de faible luminance en mode nuit, pose des problèmes d'éblouissement des appareils amplificateurs de vision nocturne, notamment les jumelles à vision nocturne dans l'infrarouge. Un filtre d'infrarouges pour les tubes en mode nuit est alors nécessaire ce qui augmente la complexité de la boîte à lumière, diminue l'intensité lumineuse des tubes et aggrave le problème de dissipation thermique dû aux calories fournies par les tubes.

La présente invention a pour but un dispositif de rétroéclairage, à plusieurs niveaux de luminance apportant des solutions améliorées aux problèmes précités, ayant une structure à la fois simple et d'une grande compacité. A cet effet, l'invention propose un dispositif de rétroéclairage, à plusieurs niveaux de luminance, pour écran de visualisation par transmission, comportant des sources lumineuses disposées dans un boîtier entre une paroi avant translucide formée d'un écran diffuseur et une paroi arrière, les sources lumineuses étant sélectionnées en fonction du niveau de luminance souhaité, caractérisé en ce que les sources lumineuses sont des mosaïques de diodes électroluminescentes placées immédiatement derrière l'écran diffuseur avec, pour le niveau de plus forte luminance, une première mosaïque de diodes électroluminescentes fournissant un éclairage de jour et avec, pour le niveau de plus faible luminance, une seconde mosaïque de sources lumineuses fournissant un éclairage de nuit.

Dans une première réalisation du dispositif de rétroéclairage selon l'invention, la première et la seconde mosaïque de diodes électroluminescentes sont sur un même plan, les diodes électroluminescentes étant câblées sur un même circuit imprimé.

L'utilisation des diodes électroluminescentes permet une grande souplesse d'adaptation de l'intensité d'éclairage en fonction des conditions d'environnement. En effet, que l'on soit dans le mode jour ou dans le mode nuit par la respective utilisation de la première ou la seconde mosaïque de diodes électroluminescentes, l'intensité lumineuse peut être réglée aisément par le contrôle du courant d'alimentation des diodes électroluminescentes. Ainsi l'intensité lumineuse, que ce soit dans le mode jour ou dans le mode nuit, peut être adaptée parfaitement aux conditions particulières de l'environnement. Par exemple, dans le mode jour, l'intensité lumineuse de la première mosaïque peut être réglée pour émettre une intensité lumineuse maximum lorsque la consultation de l'écran rétroéclairé est effectuée en plein soleil et diminuée si la lumière ambiante baisse par la présence de nuages ou qu'elle décline à la tombée du jour.

A cet effet chaque mosaïque est constituée d'un nombre déterminé de réseaux de diodes électroluminescentes. Le réglage de l'intensité lumineuse des diodes électroluminescentes d'un réseau est effectué par le contrôle du courant dans les diodes par un semi-conducteur. Les diodes d'un réseau de diodes électroluminescentes en série avec un semi-conducteur sont de préférence dispersées sur les mosaïques. En effet, en cas de panne du transistor ou d'une des diodes du réseau, la variation de luminosité qui en résulte sera diffuse et non concentrée dans une zone de la boîte à lumière comme c'est le cas des boîtes à lumières à tubes fluorescents de l'art antérieur.

Lors d'une utilisation de la boîte à lumière en mode nuit avec des équipements très sensibles aux rayonnements infrarouges, un très faible rayonnement émis par les diodes peut être suffisant pour saturer de tels équipements. Avantageusement, la boîte à lumière comporte un filtre infrarouge entre le diffuseur et les mosaïques des diodes diminuant encore le faible rayonnement infrarouge pouvant être produit par la seconde mosaïque de diodes.

Dans une variante de la boîte à lumière selon l'invention, le filtre infrarouge, entre le diffuseur et les diodes, et à proximité immédiate des mosaïques à diodes électroluminescentes, comporte une mosaïque de trous ayant la même distribution que la première mosaïque de diodes électroluminescentes. Chacune des diodes électroluminescentes de la première mosaïque faisant face à un trou respectif du filtre à infrarouges.

L'invention sera mieux comprise à l'aide d'un exemple de réalisation d'une boite à lumière selon l'invention en référence aux figures dans lesquelles :
- la figure 1 représente une réalisation d'une boîte à lumière selon l'invention ;
- la figure 2 représente une vue partielle des mosaïques des diodes électroluminescentes de la boîte à lumière de la figure 1 ;
- la figure 3 représente une vue partielle des mosaïques des diodes électroluminescentes de la figure 2 comportant un filtre infrarouge ;
- la figure 4 montre un schéma électrique d'un circuit d'alimentation des diodes électroluminescentes de la boite à lumière de la figure 1 ;
- les figures 5 et 6 représentent deux exemples de réseaux de diodes de la boîte à lumière de la figure 1.

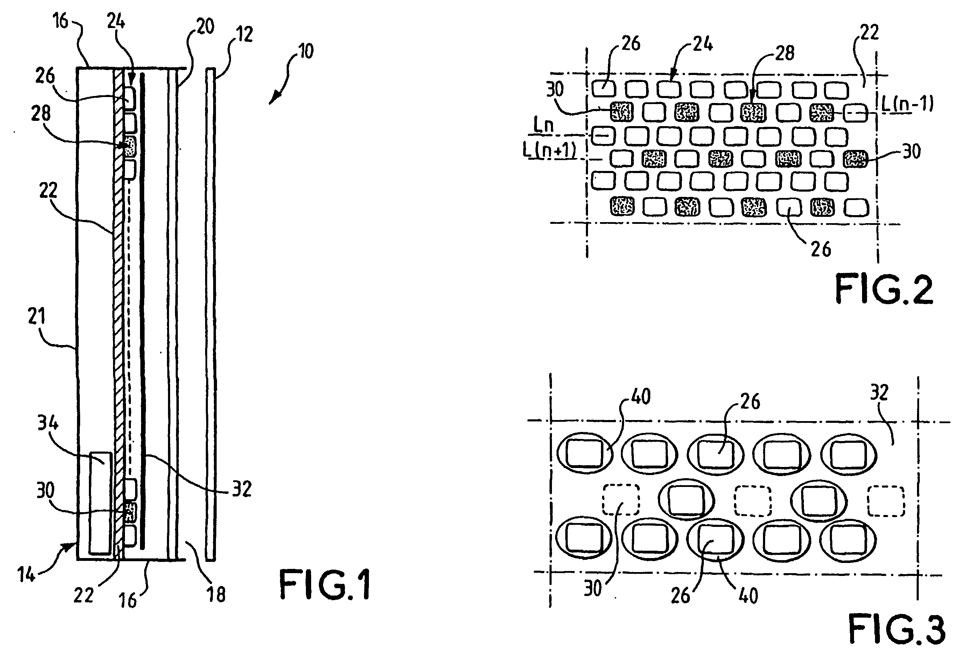

La figure 1 représente une boite à lumière 10 selon l'invention destinée à rétroéclairer un panneau à cristaux liquides 12. La boîte à lumière comporte essentiellement un boîtier 14 parallélépipédique ayant des parois latérales 16, une ouverture 18 comportant un diffuseur de lumière 20 et une paroi arrière 21.

L'intérieur du boîtier 14 comporte un circuit imprimé 22 ayant deux mosaïques de diodes électroluminescentes, une première mosaïque 24 réalisée avec des premières diodes 26 émettant une lumière de couleur sensiblement blanche et une seconde mosaïque 28 réalisée avec des secondes diodes 30 émettant une lumière de couleur qui peut être différente (par exemple de couleur verte).

La boîte à lumière comporte en outre, entre le diffuseur et les mosaïques de diodes électroluminescentes, un filtre infrarouge 32 éliminant le rayonnement infrarouge pouvant être émis par les diodes électroluminescentes vers l'extérieur de la boîte à lumière.

La figure 2 montre une vue partielle de face du circuit imprimé 22 comportant la première 24 et la seconde 28 mosaïque de diodes électroluminescentes. Les diodes des deux mosaïques sont situées sur un même plan par leur câblage sur le circuit imprimé 22 comportant des conducteurs électriques pour l'alimentation en courant des diodes. A cet effet, le circuit imprimé comporte, du côté de la face arrière du boîtier 14, une électronique de commande 34 assurant l'allumage des diodes.

La distribution des diodes sur le circuit imprimé est régulière, de type nid d'abeilles, permettant, d'une part, de disposer un grand nombre de diodes sur la surface de circuit et, d'autre part, d'assurer une émission de lumière la plus homogène possible vers le diffuseur 20. Les diodes des deux mosaïques sont intercalées entre elles avec un pas régulier assurant la meilleure homogénéité d'émission de lumière que ce soit dans le mode jour ou dans le mode nuit. A cet effet, dans cette réalisation une ligne Ln de diodes électroluminescentes ne comporte que des diodes de la première mosaïque (diodes blanches), la ligne suivante L(n+1) ou la ligne précédente L(n-1) comporte une suite de diodes alternées de la première et de la seconde mosaïque (diodes de couleur blanche et verte).

La figure 3 montre une vue de détail du filtre infrarouge 32 qui comporte une mosaïque de trous 40 ayant la même distribution que la première mosaïque 24 de diodes électroluminescentes, chacune des diodes électroluminescentes 26 de la première mosaïque faisant face à un respectif trou 40 du filtre à infrarouges. La mosaïque de trous 40 réalisée dans le filtre à infrarouge 32 évite l'atténuation du rayonnement lumineux émis par les diodes blanches qui passe à travers les trous, un filtrage des infrarouges n'étant pas nécessaire en mode jour. Par contre, en position nuit, le rayonnement infrarouge est atténué par le filtre à infrarouge qui ne présente pas des trous en face des diodes de la seconde mosaïque 28 fournissant l'éclairage de nuit.

La mosaïque de trous 40 dans le filtre à infrarouges peut être réalisé par découpage au laser permettant une grande précision de découpe.

Le filtre infrarouge peut être en matière plastique, par exemple des filtres des dénominations commerciales « Korry » ou « Schott » (notamment de référence BG 39) peuvent être utilisés.

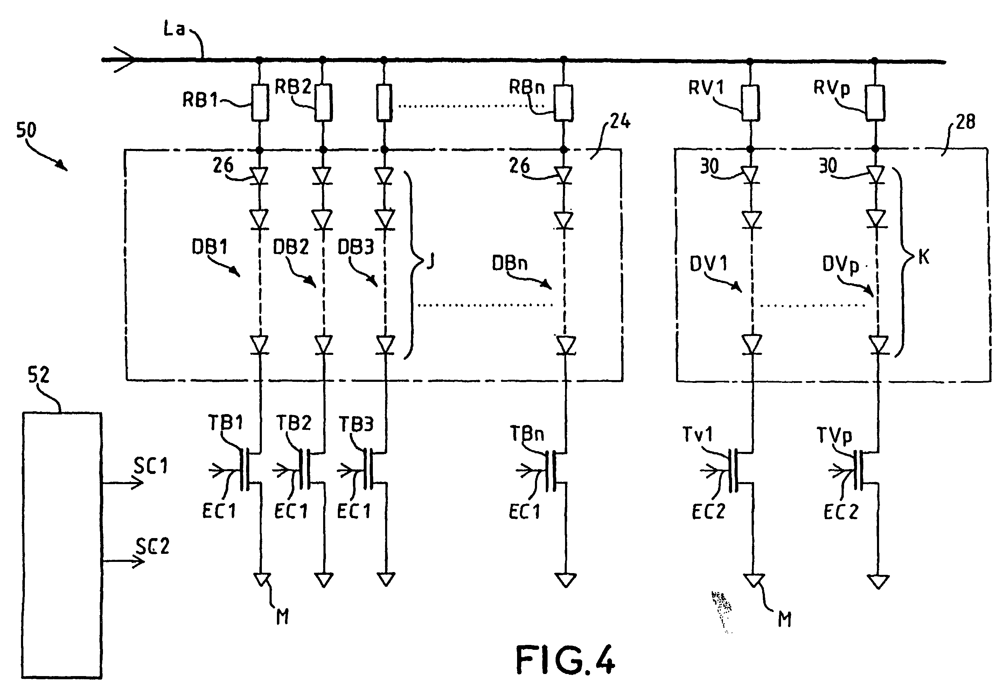

La figure 4 montre un schéma électrique d'un circuit d'alimentation 50 des première 24 et seconde 28 mosaïques des diodes électroluminescentes de la boîte à lumière de la figure 1 selon l'invention. Les diodes des deux mosaïques sont groupées par réseau de diodes en petit nombre, le réseau comportant une entrée et une sortie.

Une ligne d'alimentation La alimente, à travers des premières résistances de limitation de courant RB1, RB2,...RBn, les respectives entrées de n réseaux DB1, DB2...DBn d'un nombre J de diodes électroluminescentes par réseau de la première mosaïque 24 et à travers des secondes résistances de limitation de courant RV1, RV2,...RVp, les respectives entrées de p réseaux DV1, DV2,...DVp d'un nombre K de diodes électroluminescentes par réseau. Chaque réseau de diodes est connecté, à travers un respectif semi-conducteur, TB1, TB2,...TBn pour la première mosaïque 24 et TV1, TV2,...TVp pour la seconde mosaïque 28, à un potentiel de référence M. Chaque semi-conducteur comporte une entrée de contrôle permettant de faire varier le courant dans le réseau des diodes, une entrée EC1 pour les semi-conducteurs de la première mosaïque et une entrée EC2 pour les semi-conducteurs de la seconde mosaïque. Le semi-conducteur est un transistor à effet de champ.

Dans la réalisation de la figure 4, les J et les K diodes de chacun des réseaux de diodes sont connectées en série, la perte d'une diode d'un réseau DBx, avec x=1,2..n, ou DVy avec y=1,2,...p peut au maximum entraîner l'extinction des seules diodes du réseau DBx ou DVy.

J et K peuvent être au minimum égaux à 1 et, dans ce cas, une seule diode est contrôlée par un seul semi-conducteur.

Le circuit d'alimentation 50 comporte un circuit électronique de commande 52 ayant une première sortie de commande SC1 attaquant les entrées de contrôle EC1 des transistors à effet de champ de la première mosaïque 24 et une seconde sortie de commande SC2 attaquant les entrées de contrôle EC2 des transistors à effet de champ de la seconde mosaïque 28.

Les signaux de commande EC1 et EC2 sont sous la forme d'impulsions périodiques de largeur variable. La variation de la largeur de l'impulsion provoque une variation du courant dans le semi-conducteur et, par conséquent, la variation du niveau de l'éclairement produit par les diodes.

Les modes jour ou nuit seront pilotés par le circuit électronique de commande 52 par la saturation ou le blocage de transistors associés au réseaux de l'une ou l'autre des mosaïques et dans chaque mode le niveau d'éclairement pourra être réglé par la variation de la largeur des impulsions des signaux en sortie des commandes SC1 et SC2.

La description n'est pas limitative au transistor à effet de champ pour la commande des diodes ou à une commande électronique à impulsion, d'autres circuits électroniques de commande de transistors par exemple bipolaires peuvent être utilisés de façon connue par l'homme de métier de l'électronique pour faire varier le courant et donc l'éclairement des diodes électroluminescentes des deux mosaïques.

Les diodes de chacun des réseaux sont uniformément réparties et dispersées sur le circuit imprimé. En cas de rupture d'une d'entre elles un petit nombre de diodes (J ou K) dispersées sur le circuit imprimé est perdu, ce qui ne produit pas de variation notable de l'éclairement dans une zone déterminée de la boîte, contrairement aux boîtes à lumière de l'art antérieur comportant peu de sources de lumière.

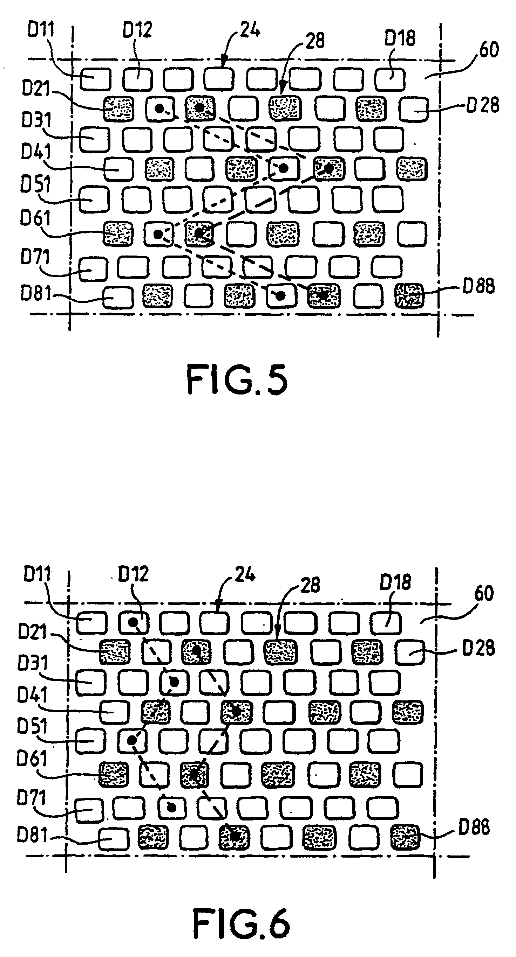

Les figures 5 et 6 représentent deux exemples de distribution des diodes électroluminescentes des réseaux des deux mosaïques.

Considérons le circuit imprimé (22) comportant une distribution de diodes électroluminescentes en nid d'abeilles et considérons une partie (60) du circuit imprimé comportant huit lignes de huit diodes électroluminescentes chacune repérées Dlc, I étant rang de la diode sur une ligne et c le rang de la ligne, la distribution des diodes étant telle que lorsqu'une ligne ne comporte que des diodes de la première mosaïque (24), la ligne suivante ou précédente comporte une alternance d'une diode de la première mosaïque (24) et une diode de la seconde mosaïque (28) et ainsi de suite, la première ligne étant une ligne de la première mosaïque, la deuxième et la sixième ligne commençant par une diode de la seconde mosaïque. A titre d'exemple non limitatif, on supposera que des réseaux de diodes électroluminescentes décrits ci-dessous comportent chacun 4 diodes, ce nombre n'étant limité que par les caractéristiques des diodes électroluminescentes et la tension d'alimentation appliquée. Dans une première distribution des diodes d'un réseau de diodes de la partie 60 considérée du circuit imprimé 22 (voir figure5) :
- le réseau de la seconde mosaïque 28 comporte 4 diodes, les diodes D23, D46, D63 et D86 étant connectées en série, la distribution étant répétée par translation horizontale selon les lignes formant des réseaux de la seconde mosaïque relatifs à cette partie 60 du circuit imprimé 22 ;
- le réseau de la première mosaïque 24 comporte 4 diodes, les diodes D22, D45, D62 et D85 étant connectées en série, la distribution étant répétée par translation horizontale selon les lignes formant des réseaux de la première mosaïque 24 relatifs à cette partie 60 du circuit imprimé 22.

Dans une deuxième distribution des diodes d'un réseau de diodes de la partie 60 considérée du circuit imprimé 22 (voir figure 6) :
- le réseau de la seconde mosaïque 28 comporte 4 diodes, les diodes D23, D44, D63 et D84 étant connectées en série, cette distribution étant répétée par translation horizontale selon les lignes formant des réseaux de la seconde mosaïque relatifs à cette partie 60 du circuit imprimé 22 ;
- le réseau de la première mosaïque 24 comporte 4 diodes, les diodes D12, D33, D52 et D73 (ou D22, D43, D62 et D83) étant connectées en série, cette distribution étant répétée par translation horizontale selon les lignes formant des réseaux de la première mosaïque 24 relatifs à cette partie 60 du circuit imprimé 22.

L'ensemble des réseaux de la première et de la seconde mosaïque sera obtenu en considérant la totalité de la surface du circuit imprimé

La boîte à lumière selon l'invention à deux niveaux d'éclairage (ou deux modes de fonctionnement), comporte l'avantage de ne présenter qu'un seul étage de sources d'éclairage contrairement aux deux rangées de tubes fluorescents des boîtes à lumière de l'art antérieur, ce qui simplifie la mécanique, diminue l'encombrement mécanique et, par conséquent, le coût de fabrication. En outre, la dynamique de l'intensité lumineuse des diodes électroluminescentes est plus importante que celle des tubes fluorescents.

Un autre avantage des boîtes à lumière selon l'invention réside dans l'utilisation de sources basse tension contrairement aux sources haute tension nécessaires pour alimenter les tubes fluorescents de boîtes de l'art antérieur. En outre, la résistance aux modes de panne et la durée de vie sont nettement améliorées par rapport aux boîtes à tubes fluorescents.

## Revendications

1. Dispositif de rétroéclairage, à plusieurs niveaux de luminance, pour écran de visualisation par transmission (12), comportant des sources lumineuses disposées dans un boîtier (14) entre une paroi avant translucide formée d'un écran diffuseur (20) et une paroi arrière (21), les sources lumineuses étant sélectionnées en fonction du niveau de luminance souhaité, les sources lumineuses étant des mosaïques (24, 28) de diodes électroluminescentes (26, 30) sur un même plan placées immédiatement derrière l'écran diffuseur avec, pour le niveau de plus forte luminance, une première mosaïque (24) de diodes électroluminescentes fournissant un éclairage de jour et avec, pour le niveau de plus faible luminance, une seconde mosaïque (28) de sources lumineuses fournissant un éclairage de nuit, **caractérisé en ce que** la distribution des diodes est telle que les diodes des deux mosaïques (24, 28) sont intercalées entre elles avec un pas régulier

2. Dispositif de rétroéclairage selon la revendication 1, **caractérisé en ce que** la première (24) et la seconde (28) mosaïque de diodes électroluminescentes sont câblées sur un même circuit imprimé (22) comportant des conducteurs électriques pour l'alimentation en courant des diodes.

3. Dispositif de rétroéclairage selon l'une des revendications 1 ou 2, **caractérisé en ce que** chaque mosaïque (24, 28) est constituée d'un nombre déterminé de réseaux (DB1, DB2...DBn)(DV1, DV2,...DVp) de diodes électroluminescentes, le réglage de l'intensité lumineuse des diodes électroluminescentes d'un réseau étant effectué par le contrôle du courant dans les diodes par un semi-conducteur (TB1, TB2,...TBn) (TV1, TV2,..,TVn.)

4. Dispositif de rétroéclairage selon la revendication 3, **caractérisé en ce que** les diodes d'un réseau de diodes électroluminescentes en série avec un semi-conducteur sont de préférence dispersées sur les mosaïques (24, 28).

5. Dispositiff de rétroéclairage selon l'une des revendications 1 à 4, **caractérisé en ce que** la boîte à lumière comporte un filtre infrarouge (32) entre le diffuseur (20) et les mosaïques (24, 28) des diodes diminuant encore le faible rayonnement infrarouge pouvant être produit par la seconde mosaïque (28) de diodes.

6. Dispositif de rétroéclairage selon la revendication 5, **caractérisé en ce que** le filtre infrarouge (32), entre le diffuseur (20) et les diodes, et à proximité immédiate des mosaïques à diodes électroluminescentes, comporte une mosaïque de trous (40) ayant la même distribution que la première mosaïque (24) de diodes électroluminescente, chacune des diodes électroluminescentes de la première mosaïque (24) faisant face à un trou (40) respectif du filtre à infrarouges.

7. Dispositif de rétroéclairage selon l'une des revendications 2 à 6, **caractérisé en ce que** la distribution des diodes sur le circuit imprimé (22) est régulière, de type nid d'abeilles, une ligne Ln de diodes électroluminescentes ne comportant que des diodes de la première mosaïque, la ligne suivante L(n+1) ou la ligne précédente L(n-1) comportant une suite de diodes alternées de la première et de la seconde mosaïque.

8. Dispositif de rétroéclairage selon l'une des revendications 2 à 7, **caractérisé en ce que** le circuit imprime (22) comporte une électronique de commande (34) assurant l'allumage des diodes.

9. Dispositif de rétroéclairage selon l'une des revendications 1 à 8, **caractérise en ce qu'**il comporte un circuit d'alimentation (50) des première (24) et seconde (28) mosaïques des diodes électroluminescentes, les diodes des deux mosaïques étant groupées par réseau de diodes en petit nombre, le réseau comportant une entrée et une sortie,

10. Dispositif de rétroéclairage selon la revendication 9, **caractérisé en ce que** le circuit d'alimentation (50) comporte une ligne d'alimentation La alimentant, à travers des premières résistances de limitation de courant (RB1, RB2,...RBn), les respectives entrées de n réseaux (DB1, DB2...DBn) d'un nombre J de diodes électroluminescentes par réseau de la première mosaïque (24) et à travers des secondes résistances de limitation de courant (RV1, RV2,...RVp), les respectives entrées de p réseaux (DV1, DV2,...DVp) d'un nombre K de diodes électroluminescentes par réseau, chaque réseau de diodes étant connecté, à travers un respectif semi-conducteur, (TB1, TB2,...TBn) pour la premièrè mosaïque (24) et (TV1, TV2,...TVp) pour la seconde mosaïque (28), à un potentiel de référence (M) chaque semi-conducteur comportant une entrée de contrôle, EC1 pour les semi-conducteurs de la première mosaïque et une de contrôle EC2 pour les semi-conducteurs de la seconde mosaïque permettant de faire varier le courant dans les réseaux des diodes.

11. Dispositif de rétroéclairage selon la revendication 10, **caractérisé en ce que** le semi-conductuer est un transistor à effet de champ.

12. Dispositif de rétroéclairage selon l'une des revendications 10 ou 11, **caractérisé en ce que** les J et les K diodes de chacun des réseaux de diodes sont connectées en série, la perte d'une diode d'un réseau DBx, avec x=1,2..n, ou DVy avec y=1,2,...p pouvant au maximum entraîner l'extinction des seules diodes du réseau DBx ou DVy.

13. Dispositif de rétroéclairage selon l'une des revendications 2 à 12, **caractérisé en ce que** la circuit imprimé (22) comporte une distribution de diodes électroluminescentes en nid d'abeille et que si l'on considère une partie (60) du circuit imprimé (22) comportant huit lignes de huit diodes électroluminescentes chacune repérées Dlc, I étant le rang de la diode sur une ligne et c le rang de la ligne, la distribution des diodes est telle que lorsqu'une ligne ne comporte que des diodes de la première mosaïque (24), la ligne suivante ou précédente comporte une alternance d'une diode de la première mosaïque (24) et une diode de la seconde mosaïque (28) et ainsi de suite, la première ligne étant une ligne de la première mosaïque, la deuxième et la sixième ligne commençant par une diode de le seconde mosaïque.

14. Dispositif de rétroéclairage selon la revendication 13, **caractérisé en ce que** dans une première distribution des diodes d'un réseau de diodes de la partie (60) considérée du circuit imprimé (22) :
- le réseau de la seconde mosaïque (28) comporte 4 diodes, les diodes D23, D46, D63 et D86 étant connectées en série, la distribution étant répétée par translation horizontal selon les lignes formant des réseaux de la seconde mosaïque relatifs à cette partie (60) du circuit imprimé (22) ;
- le réseau de la première mosaïque (24) comporte 4 diodes, les diodes D22, D45, D62 et D85 étant connectées en série, la distribution étant répétée par translation horizontale selon les lignes formant des réseaux de la première mosaïque (24) relatifs à cette partie (60) du circuit imprimé (22).

15. Dispositif de rétroéclairage selon la revendication 13, **caractérisé en ce que** dans une deuxième distribution des diodes d'un réseau de diodes de la partie (60) considérée du circuit imprimé (22) :
- le réseau de la seconde mosaïque (28) comporte 4 diodes, les diodes D23, D44, D63 et D84 étant connectées en série, cette distribution étant répétée par translation horizontale selon les lignes formant des réseaux de la seconde mosaïque relatifs à cette partie (60) du circuit imprimé (22) ;
- le réseau de la première mosaïque (24) comporte 4 diodes, les diodes D12, D33, D52 et D73 (ou D22, D43, D62 et D83) étant connectées en série, cette distribution étant répétée par translation horizontale selon les lignes formant des réseaux de la première mosaïque (24) relatifs à cette partie (60) du circuit imprimé (22).

16. Dispositif de rétroéclairage selon l'une des revendications 13 à 15, **caractérisé en ce que** l'ensemble des réseaux de la première (24) et de la seconde mosaïque (28) est obtenu en considérant la totalité de la surface du circuit imprimé (22).

## Patentansprüche

1. Rückbeleuchtungsvorrichtung mit mehreren Leuchtstärkepegeln für einen Durchlichtbildschirm (12) mit in einem Gehäuse (14) angeordneten Lichtquellen zwischen einer vorderen durchsichtigen Wand, die von einem Diffusorschirm (20) gebildet wird, und einer Rückwand (21), wobei die Lichtquellen in Abhängigkeit von dem gewünschten Leuchtstärkepegel ausgewählt werden, wobei die Lichtquellen Mosaike (24, 28) aus Lumineszensdioden (26, 30) in ein und derselben Ebene sind, die unmittelbar hinter dem Diffusorschirm platziert sind, mit einem ersten Mosaik (24) aus Lumineszensdioden, das eine Tagesbeleuchtung liefert, für den stärksten Leuchtstärkepegel und mit einem zweiten Mosaik (28) aus Lichtquellen, das eine Nachtbeleuchtung liefert, für den niedrigsten Leuchtstärkepegel, **dadurch gekennzeichnet, dass** die Verteilung der Dioden derart ist, dass die Dioden der zwei Mosaike (24, 28) in regelmäßigem Abstand ineinander gefügt sind.

2. Rückbeleuchtungsvorrichtung nach Anspruch 1, **dadurch gekennzeichnet, dass** das erste (24) und das zweite (28) Mosaik aus Lumineszensdioden auf ein und derselben gedruckten Schaltung (22) verdrahtet sind, die elektrische Leitungen für die Stromversorgung der Dioden umfasst.

3. Rückbeleuchtungsvorrichtung nach einem der Ansprüche 1 oder 2, **dadurch gekennzeichnet, dass** jedes Mosaik (24, 28) aus einer bestimmten Anzahl von Netzen (DB1, DB2...DBn)(DV1, DV2,...DVp) von Lumineszensdioden bestehen, wobei die Regelung der Lichtintensität der Lumineszensdioden eines Netzes durch die Steuerung des Stromes in den Dioden durch einen Halbleiter (TB1, TB2,...TBn) (TV1, TV2,...TVn) erfolgt.

4. Rückbeleuchtungsvorrichtung nach Anspruch 3, **dadurch gekennzeichnet, dass** die Dioden eines Netzes von Lumineszensdioden in Reihe mit einem Halbleiter vorzugsweise über die Mosaike (24, 28) verteilt sind.

5. Rückbeleuchtungsvorrichtung nach einem der Ansprüche 1 bis 4, **dadurch gekennzeichnet, dass** der Lichtkasten ein Infrarotfilter (32) zwischen dem Diffusor (20) und den Mosaiken (24, 28) der Dioden umfasst, das die geringe Infrarotstrahlung noch weiter vermindert, die durch das zweite Mosaik (28) von Dioden erzeugt werden kann.

6. Rückbeleuchtungsvorrichtung nach Anspruch 5, **dadurch gekennzeichnet, dass** das Infrarotfilter (32) zwischen dem Diffusor (20) und den Dioden und in unmittelbarere Nähe der Mosaike mit Lumineszensdioden ein Mosaik von Löchern .(40) umfasst, das die gleiche Verteilung von Lumineszensdioden wie das erste Mosaik (24) aufweist, wobei jede der Lumineszensdioden des ersten Mosaiks (24) einem jeweiligen Loch (40) des Infrarotfilters gegenüberliegt.

7. Rückbeleuchtungsvorrichtung nach einem der Ansprüche 2 bis 6, **dadurch gekennzeichnet, dass** die Verteilung der Dioden auf der gedruckten Schaltung (22) von regelmäßiger, wabenförmiger Art ist, wobei eine Zeile Ln von Lumineszensdioden nur Dioden des ersten Mosaiks umfasst, wobei die folgende Zeile L(n+1) oder die vorhergehende Zeile L(n-1) eine Folge von Dioden abwechselnd des ersten und des zweiten Mosaiks umfasst.

8. Rückbeleuchtungsvorrichtung nach einem der Ansprüche 2 bis 7, **dadurch gekennzeichnet, dass** die gedruckte Schaltung (22) eine Steuerelektronik (34) umfasst, die für das Einschalten der Dioden sorgt.

9. Rückbeleuchtungsvorrichtung nach einem der Ansprüche 1 bis 8, **dadurch gekennzeichnet, dass** sie eine Versorgungsschaltung (50) für das erste (24) und zweite (28) Mosaik der Lumineszensdioden umfasst, wobei die Dioden der zwei Mosaike in Netze von Dioden kleiner Zahl gruppiert sind, wobei das Netz einen Eingang und einen Ausgang umfasst.

10. Rückbeleuchtungsvorrichtung nach Anspruch 9, **dadurch gekennzeichnet, dass** die Versorgungsschaltung (50) eine Versorgungsleitung La umfasst, die über erste Strombegrenzungswiderstände (RB1, RB2,...RBn) die jeweiligen Eingänge von n Netzen (DB1, DB2,... DBn) einer Anzahl von J Lumineszensdioden je Netz des ersten Mosaiks (24) und über zweite Strombegrenzungswiderstände (RV1, RV2,...RVp) die jeweiligen Eingänge von p Netzen (DV1, DV2,...DVp) einer Anzahl von K Lumineszensdioden je Netz versorgt, wobei jedes Diodennetz über ein jeweiligen Halbleiter (TB1, TB2,...TBn) für das erste Mosaik (24) und (TV1, TV2,...TVp) für das zweite Mosaik (28) mit einem Referenzpotential (M) verbunden ist, wobei jeder Halbleiter einen Steuereingang EC1 für die Halbleiter des ersten Mosaiks und einen Steuereingang EC2 für die Halbleiter des zweiten Mosaiks umfassen, die es gestatten den Strom in den Diodennetzen variieren zu lassen.

11. Rückbeleuchtungsvorrichtung nach Anspruch 10, **dadurch gekennzeichnet, dass** der Halbleiter ein Feldeffekttransistor ist.

12. Rückbeleuchtungsvorrichtung nach Anspruch 10 oder 11, **dadurch gekennzeichnet, dass** die J un die K Dioden jedes Diodennetzes in Reihe geschaltet sind, wobei der Ausfall einer Diode eines Netzes DBx mit x=1,2,...n oder DVy mit y=1,2,...p höchstens die Auslöschung allein der Dioden des Netzes DBx oder DVy zur Folge hat.

13. Rückbeleuchtungsvorrichtung nach einem der Ansprüche 2 bis 12, **dadurch gekennzeichnet, dass** die gedruckte Schaltung (22) eine wabenförmige Verteilung von Lumineszensdioden umfasst und dass, wenn man einen Teil (60) der gedruckten Schaltung (22) betrachtet, der acht Zeilen von acht Lumineszensdioden umfasst, die mit Dlc bezeichnet sind, wobei 1 der Rang der Dioden auf einer Zeile und c der Rang der Zeile ist, die Verteilung dergestalt aussieht, dass, wenn eine Zeile nur Dioden des ersten Mosaiks (24) umfasst, die folgende oder vorhergehende Zeile abwechselnd eine Diode des ersten Mosaiks (24) und eine Diode des zweiten Mosaiks (28) und so weiter umfasst, wobei die erste Zeile eine Zeile des ersten Mosaiks ist und die zweite und die sechste Zeile mit einer Diode des zweiten Mosaiks beginnen.

14. Rückbeleuchtungsvorrichtung nach Anspruch 13, **dadurch gekennzeichnet, dass** bei einer ersten Verteilung von Dioden eines Diodennetzes des betrachteten Teils (60) der gedruckten Schaltung (22):
- das Netz des zweiten Mosaiks (28) 4 Dioden umfasst, wobei die Dioden D23, D46, D63 und D86 in Reihe geschaltet sind, wobei die Verteilung durch horizontale Translation entlang der Zeilen wiederholt wird, die Netze des zweiten Mosaiks bezüglich dieses Teils (60) der gedruckten Schaltung (22) bilden;
- das Netz des ersten Mosaiks (24) 4 Dioden umfasst, wobei die Dioden D22, D45, D62 und D85 in Reihe geschaltet sind, wobei die Verteilung durch horizontale Translation entlang der Zeilen wiederholt wird, die Netze des ersten Mosaiks (24) bezüglich dieses Teils (60) der gedruckten Schaltung (22) bilden.

15. Rückbeleuchtungsvorrichtung nach Anspruch 13, **dadurch gekennzeichnet, dass** bei einer zweiten Verteilung von Dioden eines Diodennetzes des betrachteten Teils (60) der gedruckten Schaltung (22):
- das Netz des zweiten Mosaiks (28) 4 Dioden umfasst, wobei die Dioden D23, D44, D63 und D84 in Reihe geschaltet sind, wobei die Verteilung durch horizontale Translation entlang der Zeilen wiederholt wird, die Netze des zweiten Mosaiks bezüglich dieses Teils (60) der gedruckten Schaltung (22) bilden;
- das Netz des ersten Mosaiks (24) 4 Dioden umfasst, wobei die Dioden D12, D33, D52 und D73 (oder D22, D43, D62 und D83) in Reihe geschaltet sind, wobei die Verteilung durch horizontale Translation entlang der Zeilen wiederholt wird, die Netzes des ersten Mosaiks (24) bezüglich dieses Teils (60) der gedruckten Schaltung (22) bilden.

16. Rückbeleuchtungsvorrichtung nach einem der Ansprüche 13 bis 15, **dadurch gekennzeichnet, dass** die Gesamtheit der Netze des ersten (24) und des zweiten Mosaiks (28) erhalten wird, indem die Gesamtheit der Oberfläche der gedruckten Schaltung (22) betrachtet wird.

## Claims

1. Backlighting device, having several brightness levels, for a transmission display screen (12), comprising light sources placed in a case (14) between a translucent front wall formed by a diffuser screen (20) and a rear wall (21), the light sources being selected according to the desired brightness level, the light sources being mosaics (24, 28) of light-emitting diodes (26, 30) lying in the same plane that are placed immediately behind the diffuser screen with, for the highest brightness level, a first mosaic (24) of light-emitting diodes that provides daytime illumination and with, for the lowest brightness level, a second mosaic (28) of light sources that supplies night-time illumination, **characterized in that** the distribution of diodes is such that the diodes of the two mosaics (24, 28) interpenetrate with a regular pitch.

2. Backlighting device according to Claim 1, **characterized in that** the first mosaic (24) and the second mosaic (28) of light-emitting diodes are wired to the same printed circuit (22) that includes electrical conductors for supplying current to the diodes.

3. Backlighting device according to either of Claims 1 and 2, **characterized in that** each mosaic (24, 28) is formed from a defined number of arrays (DB1, DB2, ... DBn)(DV1, DV2, ... DVp) of light-emitting diodes, the light intensity of the light-emitting diodes of an array being adjusted by controlling the current through the diodes by a semiconductor (TB1, TB2, ... TBn)(TV1, TV2, ... TVn).

4. Backlighting device according to Claim 3, **characterized in that** the diodes of an array of light-emitting diodes in series with a semiconductor are preferably dispersed over the mosaics (24, 28).

5. Backlighting device according to one of Claims 1 to 4, **characterized in that** the light box includes an infrared filter (32) between the diffuser (20) and the mosaics (24, 28) of diodes that further reduces the low amount of infrared radiation able to be produced by the second mosaic (28) of diodes.

6. Backlighting device according to Claim 5, **characterized in that** the infrared filter (32), between the diffuser (20) and the diodes, and in immediate proximity to the mosaics of light-emitting diodes, comprises a mosaic of holes (40) having the same distribution as the first mosaic (24) of light-emitting diodes, each of the light-emitting diodes of the first mosaic (24) facing a respective hole (40) of the infrared filter.

7. Backlighting device according to one of Claims 2 to 6, **characterized in that** the distribution of diodes on the printed circuit (22) is regular, of the honeycomb type, a line Ln of light-emitting diodes comprising only diodes of the first mosaic, the next line L(n+1) or the previous line L(n-1) comprising a series of alternating diodes of the first and second mosaics.

8. Backlighting device according to one of Claims 2 to 7, **characterized in that** the printed circuit (22) includes drive electronics (34) for turning on the diodes.

9. Backlighting device according to one of Claims 1 to 8, **characterized in that** it includes a supply circuit (50) for the first mosaic (24) and the second mosaic (28) of light-emitting diodes, the diodes of the two mosaics being grouped together in an array of a small number of diodes, the array including an input and an output.

10. Backlighting device according to Claim 9, **characterized in that** the supply circuit (50) includes a supply line La supplying, via first current-limiting resistors (RB1, RB2, ... RBn), the respective inputs of n arrays (DB1, DB2, ... DBn) of a number J of light-emitting diodes per array of the first mosaic (24) and, via second current-limiting resistors (RV1, RV2, ... RVp), the respective inputs of p arrays (DV1, DV2, ... DVp) of a number K of light-emitting diodes per array, each array of diodes being connected, via a respective semiconductor (TB1, TB2, ... TBn) for the first mosaic (24) and (TV1, TV2, ... TVp) for the second mosaic (28), to a reference potential (M), each semiconductor including a control input EC1 for the semiconductors of the first mosaic and a control input EC2 for the semiconductors of the second mosaic, allowing the current in the arrays of diodes to be varied.

11. Backlighting device according to Claim 10, **characterized in that** the semiconductor is a field-effect transistor.

12. Backlighting device according to either of Claims 10 and 11, **characterized in that** the J diodes and K diodes of each of the arrays of diodes are connected in series, it being possible for the loss of a diode of an array DBx, where x = 1,2, ..n, or DVy, where y = 1,2, ...p, to cause at most the extinction of only the diodes of the array DBx or DVy.

13. Backlighting device according to one of Claims 2 to 12, **characterized in that** the printed circuit (22) comprises a honeycomb distribution of light-emitting diodes and **in that**, when considering a part (60) of the printed circuit (22) comprising eight lines of eight light-emitting diodes each referenced DIc, I being the rank of the diode along a line and c the rank of the line, the distribution of the diodes is such that, when a line comprises only diodes of the first mosaic (24), the next or previous line comprises an alternation of a diode of the first mosaic (24) and a diode of the second mosaic (28) and so on, the first line being a line of the first mosaic, the second and sixth lines starting with a diode of the second mosaic.

14. Backlighting device according to Claim 13, **characterized in that**, in a first distribution of the diodes of a diode array of the part (60) in question of the printed circuit (22):
- the array of the second mosaic (28) comprises four diodes, the diodes D23, D46, D63 and D86 being connected in series, the distribution being repeated by a horizontal translation along the lines forming arrays of the second mosaic that relate to this part (60) of the printed circuit (22); and
- the array of the first mosaic (24) comprises four diodes, the diodes D22, D45, D62 and D85 being connected in series, the distribution being repeated by a horizontal translation along the lines forming arrays of the first mosaic (24) that relate to this part (60) of the printed circuit (22).

15. Backlighting device according to Claim 13, **characterized in that**, in a second distribution of the diodes of a diode array of the part (60) in question of the printed circuit (22):
- the array of the second mosaic (28) comprises four diodes, the diodes D23, D44, D63 and D84 being connected in series, this distribution being repeated by a horizontal translation along the lines forming arrays of the second mosaic that relate to this part (60) of the printed circuit (22); and
- the array of the first mosaic (24) comprises four diodes, the diodes D12, D33, D52 and D73 (or D22, D43, D62 and D83) being connected in series, this distribution being repeated by a horizontal translation along the lines forming arrays of the first mosaic (24) that relate to this part (60) of the printed circuit (22).

16. Backlighting device according to one of Claims 13 to 15, **characterized in that** the combination of the array of the first mosaic (24) and the array of the second mosaic (28) is obtained by considering the entire surface of the printed circuit (22).
